# EUROPEAN PATENT APPLICATION

(11) **EP 4 682 507 A1**
(43) Date of publication of application: **21.01.2026**
(21) Application number: 24189633.1
(22) Date of filing: 19.07.2024
(51) Int. Cl.: G01N 5/00, B01L 1/00, B25J 21/02

(54) **ANALYSIS SYSTEM AND ANALYSIS METHOD**

(71) Applicant: Netzsch-Gerätebau GmbH, 95100 Selb (DE)
(72) Inventor: Sato, Kenta, Kanagawa 221-0022 (JP); Kinoshita, Ryoichi, Shizuoka 412-0026 (JP)
(74) Representative: Scott, Stephen John

(57) **Abstract**

The present disclosure provides an analysis system and an analysis method, capable of setting a sample in an atmosphere where the residual water content is reduced, without using a glove box with high airtightness. An analysis system 100 according to this disclosure includes: a sample holding section 10 that holds a sample to be analyzed; an airtight section 20 that has an opening portion (lower opening 23a) to internally house the sample holding section 10 through the opening portion; and a surrounding section 30 having flexibility and visible light permeability that separates the sample holding section 10 and the opening portion of the airtight section 20 from the outside. The airtight section 20 can transition in state between a housing state where the airtight section 20 internally houses the sample holding section 10 and airtightly closes the opening portion with respect to the inside of the surrounding section 30 and a non-housing state where the sample holding section 10 is located outside the airtight section 20. When at least the airtight section 20 is in the non-housing state, a cooling section is arranged inside the surrounding section 30 but outside the airtight section 20.

## Description

### TECHNICAL FIELD

The present disclosure relates to an analysis system and an analysis method.

### BACKGROUND

In recent years, toward the goal of de-carbonization, there is rapidly increasing demand for rechargeable batteries, etc., which are suitable for electric vehicles, or as emergency power sources in the event of disaster. Many advanced materials, such as battery materials, are subjected to chemical reaction due to the presence of oxygen and moisture, and the analysis of thermophysical properties emerging when such materials are cooled or heated, as well as the analysis of gas components generated from the materials, are becoming more important. In addition, in order to accurately analyze the latest battery materials, it may be required to carry out the analysis in an atmosphere where the residual water content is reduced to the utmost limit.

With such background in view, for carrying out analysis of the latest battery materials, there has been proposed a technology wherein the sample is prepared, for example, in a special atmosphere inside a glove box, and a special container is used to prevent the sample from being exposed to the atmosphere when the sample is introduced into the analyzer, or wherein the analyzer is installed in the glove box.

For example, PTL (Patent Literature) 1 discloses a technology wherein a sample is sampled into a sample holder within a glove box (airtight chamber), and the sample holder is then moved into a sample chamber for the purpose of thermal analysis so that the atmosphere of the sample can be controlled before and after the measurement.

PTL 2 discloses a technology wherein a sample is sampled into a dedicated sample container within a glove box, and the sample container is then sealed with indium or gallium so that the sample container can be taken out of the glove box for the purpose of analysis, while being kept unexposed to the atmosphere.

PTL 3 discloses an airtight box for measurement for internally disposing a sample to be measured by a measurement device, the airtight box for measurement including: a housing having a connecting portion to be connected to a glove box; and a sample stand on which a sample is loaded, wherein the housing and the glove box internally become airtight by being connected to the glove box.

### CITATION LIST

### Patent Literature

PTL 1: JP2964140B1
PTL 2: JP5302932B2
PTL 3: JP7323892B2

### SUMMARY

### (Technical Problem)

The glove box assumed to be used in each of PTLs 1 to 3 is expensive because it has airtightness with which the inside of the glove box can be evacuated, and, in general, involves an expensive running cost because it is necessary to always supply a purge gas. Further, in PTLs 1 and 3, it is necessary to modify the device to connect the device to the glove box, and it is difficult to perform the above-described analysis with the normal device. There is thus room for improvement in these points.

The present disclosure has been made in view of the problems as noted above, and it could be helpful to provide an analysis system and an analysis method, capable of setting a sample in an atmosphere where the residual water content is reduced, without using a glove box with high airtightness.

### (Solution to Problem)

For solving the problem as noted above, the present disclosure provides an analysis system [1] including:
a sample holding section that holds a sample to be analyzed;
an airtight section that has an opening portion to internally house the sample holding section through the opening portion; and
a surrounding section having flexibility and visible light permeability that separates the sample holding section and the opening portion of the airtight section from the outside,
wherein the airtight section is capable of transitioning in state between a housing state where the airtight section internally houses the sample holding section and airtightly closes the opening portion with respect to the inside of the surrounding section and a non-housing state where the sample holding section is located outside the airtight section, and
when at least the airtight section is in the non-housing state, a cooling section is arranged inside the surrounding section but outside the airtight section.

In the analysis system according to the present disclosure,

with the configuration of [1] above, it is preferred that the inside of the airtight section is capable of being evacuated or subjected to vacuum gas replacement after the opening portion is airtightly closed with respect to the inside of the surrounding section.

In the analysis system according to the present disclosure,

with the configuration of [1] or [2] above, it is preferred that a cooling head of a refrigerator, a Peltier element or any other cooling devices is arranged as the cooling section, inside the surrounding section but outside the airtight section.

In the analysis system according to the present disclosure,

with the configuration according to any one of [1] to [3] above, it is preferred that a coolant container in which a liquid coolant is housed is arranged as the cooling section, inside the surrounding section but outside the airtight section.

In the analysis system according to the present disclosure,

with the configuration of [4] above, it is preferred that the inside of the coolant container is communicated with the outside through a surrounding section opening provided on the surrounding section.

In the analysis system according to the present disclosure,

with the configuration of [1] or [2] above, it is preferred that a cooling coil to which a liquid coolant is internally supplied is arranged as the cooling section, inside the surrounding section but outside the airtight section.

In the analysis system according to the present disclosure,

with the configuration of [6] above, it is preferred that the liquid coolant supplied to the cooling coil is supplied from the outside and discharged outside, through a surrounding section opening provided on the surrounding section.

In the analysis system according to the present disclosure,

with the configuration of [7] above, it is preferred that the discharged liquid coolant is heated and then introduced into the surrounding section as a purge gas.

In the analysis system according to the present disclosure,

with the configuration of [1] or [2] above, it is preferred that a liquid coolant introduced from the outside through a surrounding section opening provided on the surrounding section is stored, as the cooling section, inside the surrounding section but outside the airtight section.

In the analysis system according to the present disclosure,

with the configuration of [9] above, it is preferred that the liquid coolant introduced from the outside is housed in a coolant container arranged inside the surrounding section but outside the airtight section.

In the analysis system according to the present disclosure,

with the configuration according to any one of [1] to [10] above, it is preferred that the surrounding section has an operation projecting portion that inwardly projects.

In the analysis system according to the present disclosure,

with the configuration according to any one of [1] to [11] above, it is preferred that a discharge portion for discharging a gas to the outside is provided on the surrounding section.

In the analysis system according to the present disclosure,

with the configuration according to any one of [1] to [12] above, it is preferred that the airtight section has: a cylindrical-shaped airtight tube that internally houses the sample holding section; and a metal fitting cylinder portion that is fixed to an end of the airtight tube to form the opening portion, and the fitting cylinder portion is fitted to an opening of a closed space facing the inside of the surrounding section to airtightly close the opening portion with respect to the inside of the surrounding section.

For solving the problem as noted above, the present disclosure provides an analysis method [14] by an analysis system including:
a sample holding section that holds a sample to be analyzed;
an airtight section that has an opening portion to internally house the sample holding section through the opening portion; and
a surrounding section having flexibility and visible light permeability that separates the sample holding section and the opening portion of the airtight section from the outside,
the analysis method including:
   a step of causing the airtight section to transition in state to a non-housing state where the sample holding section is located outside the airtight section;
   a step of actuating a cooling section provided outside the airtight section; and
   a step of causing the airtight section to transition in state to a housing state where the airtight section internally houses the sample holding section and airtightly closes the opening portion with respect to the inside of the surrounding section.

### (Advantageous Effect)

The present disclosure makes it possible to provide an analysis system and an analysis method, capable of setting a sample in an atmosphere where the residual water content is reduced, without using an expensive glove box with high airtightness.

### BRIEF DESCRIPTION OF THE DRAWINGS

In the accompanying drawings:
FIG. 1A is a view illustrating the configuration (non-housing position) of the mechanism portion in the analysis system according to a first embodiment of the disclosure;
FIG. 1B is a view illustrating the configuration (housing position) of the mechanism portion in the analysis system according to the first embodiment of the disclosure;
FIG. 2 is a block diagram illustrating the configuration of the control system in the analysis system according to the first embodiment of the disclosure;
FIG. 3 is a flow chart illustrating the procedure for carrying out the analysis method according to the first embodiment of the disclosure;
FIG. 4 is a view illustrating the configuration of the mechanism portion in the analysis system according to a second embodiment of the disclosure;
FIG. 5 is a flow chart illustrating the procedure for carrying out the analysis method according to the second embodiment of the disclosure;
FIG. 6 is a view illustrating the configuration of the mechanism portion in the analysis system according to a third embodiment of the disclosure;
FIG. 7 is a block diagram illustrating the configuration of the control system in the analysis system according to the third embodiment of the disclosure;
FIG. 8 is a flow chart illustrating the procedure for carrying out the analysis method according to the third embodiment of the disclosure;
FIG. 9 is a view illustrating the configuration of the mechanism portion in the analysis system according to a fourth embodiment of the disclosure;
FIG. 10 is a block diagram illustrating the configuration of the control system in the analysis system according to the fourth embodiment of the disclosure; and
FIG. 11 is a flow chart illustrating the procedure for carrying out the analysis method according to the fourth embodiment of the disclosure.

### DETAILED DESCRIPTION

Hereinafter, embodiments according to the present disclosure will be described in detail with reference to the drawings.

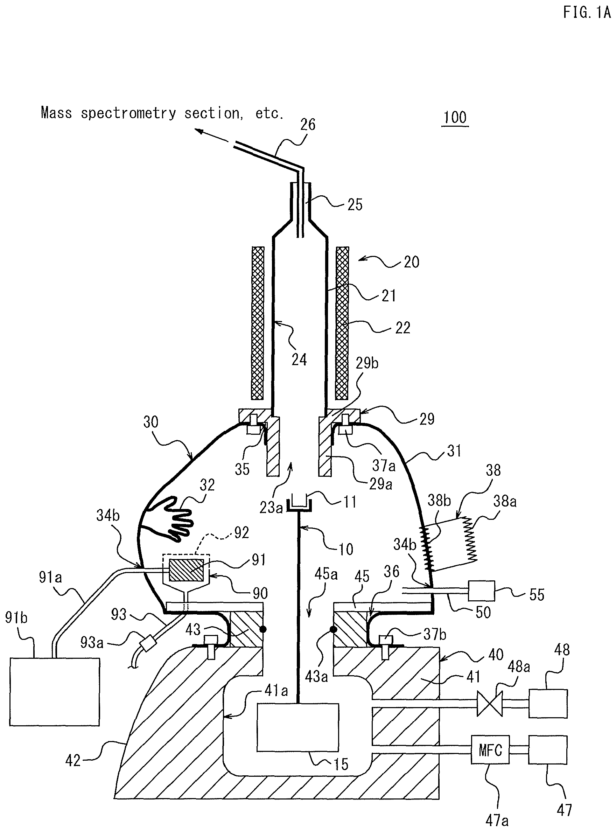

FIG. 1A is a view illustrating the configuration of an analysis system 100 according to a first embodiment of the disclosure. The analysis system 100 according to this embodiment includes: a sample holding section 10 that holds a sample to be analyzed; an airtight section 20 that has an opening portion (lower opening 23a) to internally house the sample holding section 10; a film surrounding section 30 having visible light permeability that separates the sample holding section 10 and the opening portion (lower opening 23a) of the airtight section 20 from the outside; and a base portion 40 that supports the sample holding section 10, a measuring section 15, which is described later, etc. The surrounding section 30 has flexibility with which it can easily deform while keeping airtightness with the outside, during the movement of the airtight section 20.

In FIG. 1A, the airtight section 20 has a structure in which a cylindrical airtight tube 21 formed of alumina, quartz, or the like with one side (upper side) end narrowed and a flange member 29 made of metal such as stainless steel, which is mounted on the other side (lower side) end of the airtight tube 21, are integrated by an adhesive, etc. The flange member 29 includes a fitting cylinder portion 29a that forms the lower opening 23a. A heating section 22 is arranged on the outside in the radial direction of the airtight tube 21. The heating section 22 is integrated into the airtight section 20 with a fixing means or the like to be movable in the vertical direction together with the airtight tube 21.

In the specification, claims, abstract, and drawings of this application, the vertical direction is based on a state where the analysis system 100 is placed on the horizontal surface, and the side on which the airtight section 20 is positioned is the upper side, while the side on which the base portion 40 is positioned is the lower side. The front side is the left side in FIG. 1A on which an operation panel 42 operated by a worker is provided, while the rear side is a direction (right side in FIG. 1A) opposite to the front side. The left-right direction is a direction perpendicular to the sheet of FIG. 1A. "The outside" refers to a space outside the analysis system 100.

This embodiment is described assuming that the analysis system 100 includes a thermo gravimeter/differential scanning calorimeter (TG/DSC). However, the present disclosure is not limited to this aspect. The analysis system 100 is applicable so long as it is an analysis system 100 that includes a sample holding section 10, on which a sample is placed, and an airtight section 20 for keeping the periphery of the sample airtight. The analysis system 100 may include another thermal analyzer such as a thermo gravimeter/differential thermal analyzer (TG/DTA), a thermomechanical analyzer (TMA), or a dynamic mechanical analyzer (DMA), in addition to the thermo gravimeter/differential scanning calorimeter (TG/DSC). The analysis system 100 may also include analyzers other than the thermal analyzer, such as analyzers, e.g., a scanning electron microscope (SEM); a gas chromatograph (GC) equipped with an attachment device for introduction of a sample; a GC.MS in which the gas chromatograph equipped with the attachment device is connected to a mass spectrometer (MS); a GC/TOF-MS; a time of flight secondary ion mass spectrometry (TOF-SIMS); an X-ray diffractometer (XRD); and an X-ray photoelectron spectrometer (XPS).

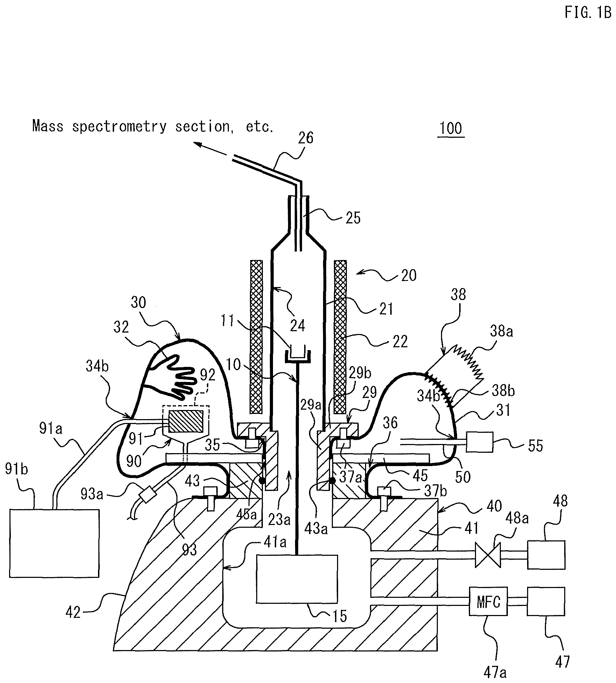

In this embodiment, the analysis system 100 includes a second gas supply section 47 for introducing a purge gas (inert gas such as nitrogen; dew-point temperature: about -70°C or less) into an internal space 24 in the airtight section 20 and an airtight space portion 41a in the base portion 40 in FIG. 1A and FIG. 1B via a mass flow controller (MFC) 47a from the second gas supply section 47. The measurement, analysis, and the like of the sample in the airtight section 20 may be performed in a state (housing state) where the sample is arranged in the airtight section 20, the airtight section 20 is moved to a housing position (see FIG. 1B), which is described later, and the inside of the airtight section 20 is airtightly closed, while the purge gas from the second gas supply section 47 being continuously flowed. Further, evacuation may be performed by a pump 48 via a valve 48a mounted on the base portion 40. Further, after the evacuation, the valve 48a may be closed to internally introduce a purge gas (inert gas such as nitrogen; dew-point temperature: about -70°C or less) via the mass flow controller (MFC) 47a, that is, vacuum gas replacement may be performed. The "evacuation" in the specification, etc. of this application refers to decreasing the internal pressure to a pressure of about 100 [Pa] or less.

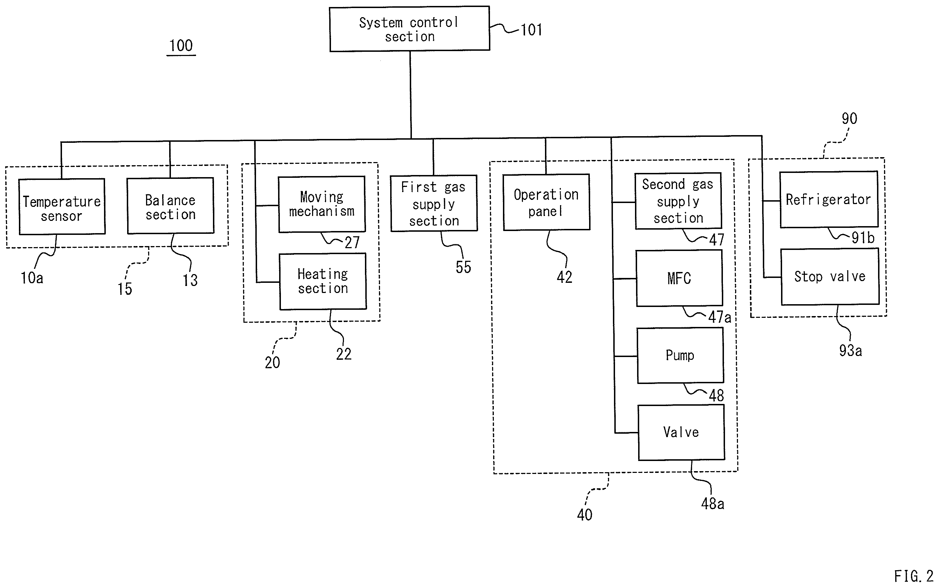

The sample holding section 10 holds a sample, is connected to a balance section 13 (weight measuring section) (see FIG. 2) of the measuring section 15 provided at the lower side, and can measure the change in weight of the sample. The measuring section 15 also includes a temperature sensor 10a (see FIG. 2) that measures the temperature of the sample. The worker puts the sample in the sample container 11 and places the sample container 11 on the sample holding section 10. The sample container 11 in a sample tray may be automatically arranged on the sample holding section 10 using an autosampler.

In consideration of measurement temperature conditions and the like, the material of the sample container 11 may be, for example, alumina, platinum, platinum rhodium alloy, quartz glass, aluminum, magnesium oxide (MgO), yttrium oxide (Y₂O₃), gold (Au), silver (Ag), graphite, boron nitride (BN), molybdenum (MO), or zirconium oxide (ZrOs).

As the temperature sensor 10a, for example, a thermocouple obtained by joining platinum rhodium alloy (PtRh) and platinum (Pt) can be used.

The system control section 101 uses the balance section 13 to measure the change in weight of the sample.

The details in a case where TG-DSC configuration is used have been disclosed in, for example, JP5933653B2. Thus, the detailed description of the TG-DSC configuration is omitted.

The balance section 13 is appropriately installed in the airtight space portion 41a, the inside of the base portion 40. The base portion 40 includes: a base housing 41 in which the airtight space portion 41a is internally provided; the operation panel 42 operated by the worker to input various kinds of information and to actuate the device when using the analysis system 100; and a working base 45 having an approximately rectangular shape in the plan view, which is provided via a fixing cylinder portion 43, above the base housing 41. An O-ring 43a is appropriately arranged inside the fixing cylinder portion 43, which forms a base opening 45a. When the airtight section 20 is moved to the lower side, the fitting cylinder portion 29a is fitted to the O-ring 43a to make all of the internal space 24 of the airtight section 20 including the sample holding section 10 and of the airtight space portion 41a be in an airtight state.

At the approximately center position in the surface direction of the working base 45, the base opening 45a (opening) that is communicated with the airtight space portion 41a (closed space) is provided. As described later, after the sample container 11 in which the worker has put the sample is set at the sample holding section 10 in a state where the dew point has been sufficiently decreased, the airtight section 20 is moved to the lower side by a moving mechanism 27 (see FIG. 2) to cause a fitting cylinder portion 29a provided at the lower portion of the airtight section 20 to be fitted to the base opening 45a at the base portion 40 side. This causes the internal space 24 of the airtight section 20 and the airtight space portion 41a of the base portion 40 to be in a state that is sealed and airtightly kept with respect to the outside and to the inner space of the surrounding section 30, in a housing state (housing position) (see FIG. 1B) that internally houses the sample holding section 10. At this housing position, the internal space 24 of the airtight section 20 and the airtight space portion 41a of the base portion 40 are airtightly sealed not only with respect to the outside of the analysis system 100 but also with respect to the space inside the surrounding section 30 but outside the airtight section 20 and the base portion 40.

The dew-point temperature in the inner space of the surrounding section 30 may be measured by a dew-point meter or managed depending on the installation time of a cooling unit 90, the supply time of the purge gas, and the like. The dew-point temperature, the oxygen concentration, and the like may be managed by the mass analysis through a capillary tube 26.

As illustrated in FIG. 1A, the airtight section 20 includes: the airtight tube 21 made of alumina, quartz, or the like having a lidded cylindrical shape with a tapered upper edge portion; and the integrated flange member 29 having airtightness at the lower end portion of the airtight tube 21. The flange member 29 is formed of a metal material such as stainless steel and includes: the fitting cylinder portion 29a hanging from the lower end portion of the airtight tube 21; and the flange portion 29b extending outside from the upper end portion of the fitting cylinder portion 29a in the radial direction. The airtight tube 21 is fixed by adhesion or the like to a cutout portion provided at the corner of the flange member 29, at which the fitting cylinder portion 29a and the flange portion 29b are connected to one another. The inner side of the fitting cylinder portion 29a forms the lower opening 23a that causes the internal space 24 to be communicated with the outside of the airtight section 20. As described above, fitting the outer surface of the fitting cylinder portion 29a to the inner surface of the base opening 45a at the base portion 40 side via the O-ring 43a causes the internal space 24 of the airtight section 20 and the airtight space portion 41a of the base portion 40 to be communicated with one another in a state that is sealed and airtightly kept with respect to the outside and to the inside of the surrounding section 30. The important things for the analysis of advanced materials such as battery materials are the dew point and oxygen concentration in the atmosphere. The inside of the airtight space portion 41a is evacuated by the pump 48 (see FIG. 2) in a state where the internal space 24 of the airtight section 20 and the airtight space portion 41a of the base portion 40 are airtightly kept with respect to the outside and to the inside of the surrounding section 30. This can remove unnecessary gases such as oxygen in the internal space 24 of the airtight section 20 and the airtight space portion 41a of the base portion 40, in addition to the water removal by the cooling unit 90, which is described later.

As the pump 48, for example, a rotary pump, dry pump, or turbo-molecular pump can be used. The rotary pump, dry pump, or turbo-molecular pump evacuates the inside of the airtight space portion 41a, which can lower the dew point in the internal space 24 of the airtight section 20 and the airtight space portion 41a and remove gases such as oxygen that inhibit sample analysis. The dew-point temperature in the airtight section 20 is preferably -40°C or less, further preferably -60°C or less, and most preferably -80°C or less. A device (SEM, TOF-SIMS, etc.) that performs measurement while keeping the vacuum within the airtight section 20 allows the measurement in this state.

On the other hand, in thermal analysis by the TG or the like, what is called, vacuum gas replacement is performed using an inert gas introduced via the mass flow controller 47a from the second gas supply section 47 after evacuation. This allows the measurement with the oxygen concentration around the sample lowered as well.

The upper portion of the airtight tube 21 has a reduced diameter, and an upper opening 25 through which the capillary tube 26 is inserted is formed on the upper portion. The gas generated from the sample at the time of thermal analysis through the capillary tube 26 is introduced into a mass spectrometry section to perform mass spectrometry (also referred to as "MS") measurement, which can also identify the gas. The present disclosure is not limited to this aspect and may be configured to introduce the gas generated from the sample at the time of thermal analysis into a gas chromatograph mass spectrometry section (GC/MS) or a Fourier transform infrared spectroscopy analysis section (FT-IR), instead of the mass spectrometry section.

In this embodiment, the surrounding section 30 is configured using, what is called, a glove bag having flexibility and visible light permeability and includes a film cover body 31 made of transparent synthetic resin and an operation projecting portion 32 that projects inside from the cover body 31. The operation projecting portion 32 has a glove shape into which a human hand can be inserted. The worker can put his/her hand in the operation projecting portion 32 to perform operation such as placing the sample in the sample tray into the sample container 11. The worker may also treat the sample or the like through the cover body 31, without providing the operation projecting portion 32. It is desirable to further mount a small sample pass bag 38 (see FIG. 1A and FIG. 1B) for introducing a sample from the outside, on the cover body 31. The sample pass bag 38 has a function capable of opening and closing at each of the cover body 31 side and the outer side, for example, a zipper-like function (outer zipper 38a and inner zipper 38b). The sample may be incorporated into the surrounding section 30 by putting the sample in the sample pass bag 38 from the outer zipper 38a, closing the outer zipper 38a, and then opening the inner zipper 38b at the cover body 31 side.

The cover body 31 of the surrounding section 30 has pliability (flexibility) such that it can follow the movement in the vertical direction of the airtight section 20. The cover body 31 is formed of a transparent or translucent material having visible light permeability so that the inside of the surrounding section 30 can be seen from the outside. As the material of the cover body 31, for example, polyethylene (PE), polypropylene (PP), or polyvinyl chloride (PVC) can be used.

In this embodiment, as illustrated in FIG. 1A, a cover upper opening 35 for causing the inside of the surrounding section 30 to be communicated with the inside of the airtight section 20 is provided on the cover body 31. A cover lower opening 36 for causing the inside of the surrounding section 30 to be communicated with the airtight space portion 41a of the base portion 40 is also provided on the cover body 31.

As illustrated in FIG. 1A, in a state where the fitting cylinder portion 29a on the airtight section 20 side is inserted thorough the cover upper opening 35, a cover upper fixing screw 37a is screw-engaged with a female screw portion provided on the flange portion 29b of the flange member 29. With this configuration, the upper portion of the cover body 31 is fixed to the lower surface of the flange portion 29b. Similarly, in a state where the fixing cylinder portion 43 on the base portion 40 side is inserted thorough the cover lower opening 36, a cover lower fixing screw 37b is screw-engaged with a female screw portion provided on the outer side in the radial direction of the fixing cylinder portion 43 on the upper wall of the base housing 41. With this configuration, the lower portion of the cover body 31 is fixed to the upper wall of the base housing 41.

In this embodiment, the airtight section 20 is configured such that the airtight tube 21 and the flange member 29 are fixed to one another by adhesion or the like. However, the present disclosure is not limited to this aspect. The airtight section 20 may be obtained by a member in which the airtight tube 21 and the flange member 29 are integrated.

As illustrated in FIG. 1A, a small-diameter side opening 34b is provided on the side of the cover body 31. The purge gas is supplied from an external first gas supply section 55 through a gas introduction tube 50 inserted through the side opening 34b. The purge gas is, for example, a dried nitrogen gas, argon gas, helium gas, etc.

A cooling head 91 of the cooling unit 90 is arranged inside the surrounding section 30 but outside the airtight section 20, on the working base 45. The cooling head 91 cools the inside of the surrounding section 30 by heat-exchanging a refrigerant supplied from a refrigerator 91b through a refrigerant tube 91a, inside the surrounding section 30. The cooling head 91 is covered with a mesh cover 92 as illustrated in FIG. 1A to prevent the worker from directly touching the cooling head 91 by hand. Under the cooling head 91, a drain tube 93 for discharging water formed by condensation of water vapor contained in the air in the surrounding section 30, which is cooled by the cooling head 91, to the outside and a stop valve 93a that controls the flow of the discharged water are provided.

As the refrigerator 91b of the cooling unit 90, a common refrigerator that draws surrounding heat by vaporizing the refrigerant in the cooling head 91, as well as various forms of refrigerators such as a Stirling refrigerator, a Gifford McMahon (GM) refrigerator, or a pulse tube refrigerator, can be used.

In this embodiment, for example, arranging the cooling head 91 that can be cooled to -90°C inside the surrounding section 30 but outside the airtight section 20 condenses the water vapor contained in the air around the cooling head 91, on the outer surface of the cooling head 91. Subsequently, the water vapor contained in the air in the surrounding section 30 sequentially concentrates at the cooling head 91 to condense. At the same time that the cooling head 91 condenses the water vapor in the surrounding section 30, a dry nitrogen gas with a dew-point temperature of -70°C or less is introduced into the surrounding section 30 from the first gas supply section 55 through the gas introduction tube 50. With this configuration, the dew-point temperature in the surrounding section 30 can be lowered to -70°C or less in around 1 minute.

In this embodiment, the cooling head 91 that can be cooled to -90°C is arranged inside the surrounding section 30, as a cooling section. However, the present disclosure is not limited to this aspect. The cooling head 91 may be used by appropriately selecting the minimum temperature of the cooling head 91, for example, from -90°C to -40°C, depending on the dew-point temperature required in the surrounding section 30. Instead of the combination of the refrigerator 91b and the cooling head 91, a Peltier element in which one side is cooled by energization may be arranged inside the surrounding section 30, as the cooling section. When the Peltier element is arranged as the cooling section, for example, the cooled surface of the Peltier element may be oriented upward, while the heat exhaust surface may be mounted on a radiating fin mounted on the working base 45. Instead of the cooling head 91 or the Peltier element, any other cooling device that can cool the inside of the surrounding section 30 to a predetermined dew point temperature by supplying energy may be arranged as the cooling section.

This embodiment is also configured such that the gas from the first gas supply section 55 is supplied such that the system control section 101 controls a gas supply valve of the first gas supply section 55. However, the present disclosure is not limited to this aspect. The supply of gas may be performed such that the worker manually operates the gas supply valve. To perform the gas purge of the airtight space portion 41a, it is more desirable to simultaneously perform the gas purge from the second gas supply section 47 via the mass flow controller 47a.

Each process in the system control section 101 may be carried out as software processing, for example, by executing a predetermined program stored in a storage unit by means of a central processing unit (CPU) or a digital signal processor (DSP) included in the system control section 101. However, the present disclosure is not limited to this aspect. Each process may be carried out as hardware processing, for example, by means of application specific integrated circuit (ASIC), programmable logic device (PLD), field programmable gate array (FPGA), etc.

The storage unit for storing the predetermined program includes a readable storage medium that, in turn, includes other tangible storage media, such as a rewritable and programmable ROM, e.g., EPROM, EEPROM or flash memory, or a magnetic disk storage medium capable of storing information; or combination thereof. The storage unit may be provided in the system control section 101 or may be a storage medium in an external storage device that can be connected to the system control section 101.

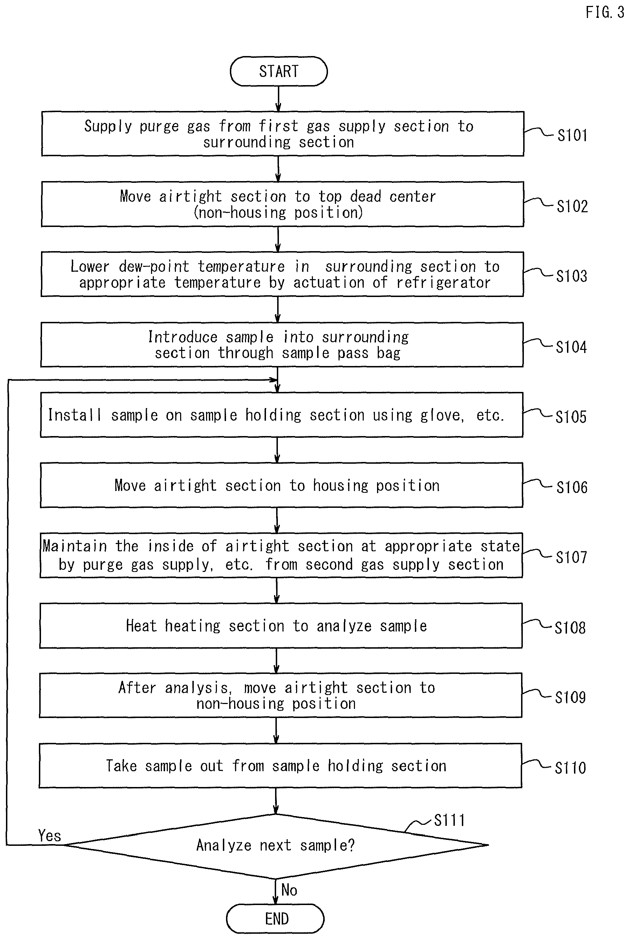

Next, the procedure for carrying out the analysis method according to the present embodiment using the analysis system 100 with the above configuration is described using FIG. 3 and other drawings.

First, before carrying out the analysis method according to this embodiment, the worker (1) installs the surrounding section 30 on the airtight section 20 and the base portion 40 and (2) arranges the cooling head 91 of the cooling unit 90 at the position inside the surrounding section 30 but outside the airtight section 20, where the cooling head 91 does not interfere with the airtight section 20 even in the "housing position". Steps (1) and (2) above are preconditions for carrying out the analysis method according to this embodiment, but they are not steps performed each time this analysis method is carried out and are thus not included in the procedure for carrying out the analysis method that is described below.

For the installation of the surrounding section 30, in a state where the fitting cylinder portion 29a on the airtight section 20 side is inserted through the cover upper opening 35, the cover upper fixing screw 37a with a washer is screw-engaged with the female screw portion provided outside in the radial direction of the fitting cylinder portion 29a on the flange portion 29b of the flange member 29 to fix the upper portion of the cover body 31 to the lower portion of the airtight section 20. Further, in a state where the fixing cylinder portion 43 on the base portion 40 side is inserted through the cover lower opening 36, the cover lower fixing screw 37b with a washer is screw-engaged with the female screw portion provided outside in the radial direction of the fixing cylinder portion 43 on the upper wall of the base housing 41 to fix the lower portion of the cover body 31 to the upper wall of the base housing 41.

Further, one end of the gas introduction tube 50 is inserted through the side opening 34b of the cover body 31 to prepare the gas supply to the surrounding section 30.

"Arranging the cooling head 91 at the position outside the airtight section 20" means arranging the cooling head 91 to be located outside the airtight section 20 in the plan view. The cooling head 91 is arranged at the position where the cooling head 91 does not inhibit the supply operation of the sample to the sample holding section 10 by the worker. In FIG. 1A, the cooling head 91 is arranged at the position offset in the left-right direction (direction perpendicular to the sheet of FIG. 1A) from the sample holding section 10 so that the cooling head 91 does not inhibit the supply operation, etc. of the sample to the sample holding section 10 by the worker. The cooling head 91 is arranged to be located inside the surrounding section 30.

In carrying out the analysis method according to this embodiment, first, by the operation of the operation panel 42 or the execution of a control program by the worker, the system control section 101 opens the gas supply valve to supply the purge gas from the first gas supply section 55 to the surrounding section 30 through the gas introduction tube 50 (step S101 in FIG. 3). The purge gas may be a nitrogen gas with a controlled low dew-point temperature (for example, dew-point temperature: -70°C), argon gas, helium gas, etc. The supply of the purge gas may be performed by the control of the gas supply valve of the first gas supply section 55 by the system control section 101 or by the direct operation of the gas supply valve by the worker.

Next, by the operation of the operation panel 42, etc., the moving mechanism 27 moves the airtight section 20 to the top dead center position (non-housing position) as illustrated in FIG. 1A to be in a non-housing state (step S102 in FIG. 3).

Next, by the operation of the operation panel 42 or the execution of the control program by the worker, the system control section 101 actuates the refrigerator 91b, condenses the water vapor in the surrounding section 30, and then lowers the dew-point temperature in the surrounding section 30 to an appropriate dew-point temperature (step S103 in FIG. 3). By the introduction of the purge gas into the surrounding section 30 in step S101 and the actuation of the cooling section in step S103, the dew-point temperature of the space in the surrounding section 30 (space inside the surrounding section 30, in the internal space 24 of the airtight section 20, and in the airtight space portion 41a of the base portion 40) can be lowered to -70°C or less.

Next, the worker introduces the sample into the surrounding section 30 through the sample pass bag 38 (step S104 in FIG. 3). When the sample is put in the surrounding section 30, first, the outer zipper 38a is opened in a state where the inner zipper 38b is closed, and the outer zipper 38a is closed after the sample is put in the sample pass bag 38. Next, only the inner zipper 38b is opened to introduce the sample in the sample pass bag 38 into the surrounding section 30.

Next, the worker puts his/her hand in the operation projecting portion 32 (glove) of the surrounding section 30 and grasps the sample container 11 containing the sample to install the sample container 11 on the sample holding section 10 through the operation projecting portion 32 (step S105 in FIG. 3). The autosampler may automatically arrange the sample container 11 containing the sample in the sample tray, on the sample holding section 10.

Next, by the operation of the operation panel 42 or the execution of the control program by the worker, the system control section 101 causes the moving mechanism 27 to move the airtight section 20 to the height position (housing position) at which the fitting cylinder portion 29a is fitted to the inner side of the base opening 45a to be in the housing state (see FIG. 1B) (step S106 in FIG. 3). By moving (causing state transition of) the airtight section 20 to be in the housing state, the sample holding section 10 is housed in the airtight section 20. By fitting the fitting cylinder portion 29a to the O-ring 43a on the inner surface of the base opening 45a, the lower opening 23a (opening portion) of the airtight section 20 and the base opening 45a of the base portion 40 are sealed and closed in a state airtightly kept with respect to the outside and to the inside of the surrounding section 30. At this point of time, the dew-point temperature in the internal space 24 of the airtight section 20 and in the airtight space portion 41a of the base portion 40 is also kept at roughly -70°C or less.

Next, by the operation of the operation panel 42 or the execution of the control program by the worker, the system control section 101 controls a mass flow controller (MFC) 47a or a valve 48a to maintain the internal space 24 of the airtight section 20 and the airtight space portion 41a of the base portion 40 at an appropriate state (step S107 in FIG. 3). For the maintenance at an appropriate state, for example, in a state (housing state) where the airtight section 20 and the airtight space portion 41a are airtightly closed, the purge gas from the second gas supply section 47 may be continued to be flowed via the mass flow controller (MFC) 47a. The pump 48 may evacuate the inside of the airtight section 20 and the airtight space portion 41a via the valve 48a provided on the base portion 40. Further, after the evacuation, the valve 48a may be closed to introduce the purge gas (inert gas such as nitrogen; dew-point temperature: about -70°C or less) from the second gas supply section 47 into the internal space 24 of the airtight section 20 and the airtight space portion 41a of the base portion 40, what is called, vacuum gas replacement may be performed. In such a way, by maintaining the inside of the airtight section 20 at an appropriate state in a state where the internal space 24 of the airtight section 20 and the airtight space portion 41a of the base portion 40 are airtight kept with respect to the outside and to the inside of the surrounding section 30, oxygen and the like in the internal space 24 of the airtight section 20 and the airtight space portion 41a of the base portion 40 can be removed, in addition to the water removal by the cooling unit 90. Therefore, lowering of the dew-point temperature and lowering of the oxygen concentration in atmosphere, which will be important for the analysis of advanced materials such as battery materials, can be achieved.

Next, by the operation of the operation panel 42 or the execution of the control program by the worker, the system control section 101 heats the heating section 22 of the airtight section 20 to carry out the analysis of the sample in the internal space 24 (step S108 in FIG. 3). In the analysis system 100 according to this embodiment, the system control section 101 measures a sample temperature Ts when the sample is heated by the heating section 22, and a change in weight, etc. of the sample.

Next, by the operation of the operation panel 42 or the execution of the control program by the worker, the system control section 101 stops the analysis and then stops the evacuation of the airtight section 20 when the airtight section 20 is evacuated and moves the airtight section 20 to the non-housing position to be in the non-housing state (step S109 in FIG. 3). The worker puts his/her hand in the operation projecting portion 32 of the surrounding section 30 again to take the sample out from the sample holding section 10 (step S110 in FIG. 3). The worker also takes the analyzed sample out to the outside via the sample pass bag 38, as necessary. When the analysis of the sample is subsequently performed (in a case of "Yes" in step S111 in FIG. 3), the worker carries out step S105 to step S110 in FIG. 3 again.

The case where the analysis system 100 is a TG/DSC has been described above. However, the present disclosure is not limited to this aspect. The analysis system 100 may be, for example, a system that carries out thermal analysis other than the TG/DSC or may be a system that carries out the analysis of the sample other than the thermal analysis, such as a SEM. When the analysis system 100 is a system that functions as the SEM, after treating the sample so as not to contain moisture by setting the sample to the sample holding section 10 in an atmosphere where the dew-point temperature in the surrounding section 30 is low, the airtight section 20 may be evacuated in the housing state to protect a filament that emits an electron beam. In this case, the airtight space portion 41a of the base portion 40 is not required to be provided.

The analysis system 100 according to this embodiment is preferred for the application in which, after the sample is set to the sample holding section 10 so as not to be exposed to moisture, the sample is analyzed under vacuum environment in the airtight section 20 or after vacuum gas replacement. However, the present disclosure is not limited to this aspect. The analysis system 100 can also be used for an application in which, after the sample is set to the sample holding section 10 so as not to be exposed to moisture, the sample is analyzed without evacuating the airtight section 20.

As described above, this embodiment is an analysis system 100 including: the sample holding section 10 that holds a sample to be analyzed; the airtight section 20 that has the opening portion (lower opening 23a) to internally house the sample holding section 10 through the opening portion; and the surrounding section 30 having flexibility and visible light permeability that separates the sample holding section 10 and the opening portion of the airtight section 20 from the outside. The airtight section 20 can transition in state between the housing state where the airtight section 20 internally houses the sample holding section 10 and airtightly closes the opening portion with respect to the inside of the surrounding section 30 and the non-housing state where the sample holding section 10 is located outside the airtight section 20. When at least the airtight section 20 is in the non-housing state, the cooling section is arranged inside the surrounding section 30 but outside the airtight section 20. By adopting such a configuration, the dew-point temperature in the atmosphere when the sample is set can be lowered in a short time without using an expensive and highly airtight glove box. Therefore, the analysis of the latest battery materials, etc. can be performed in an atmosphere where the residual water content is reduced to the utmost limit.

This embodiment is also configured such that the inside of the airtight section 20 can be evacuated or subjected to vacuum gas replacement after the opening portion (lower opening 23a) is airtightly closed with respect to the inside of the surrounding section 30. By adopting such a configuration, the analysis of the latest battery materials, etc. can be performed in an atmosphere where the residual water content is reduced to the utmost limit and unnecessary gases such as oxygen are reduced to the utmost limit.

This embodiment is also configured such that the cooling head 91 of the refrigerator 91b, the Peltier element or any other cooling devices is arranged as the cooling section, inside the surrounding section 30 but outside the airtight section 20. By adopting such a configuration, the water vapor of the air in the surrounding section 30 can be condensed to safely and stably activate the cooling section for lowering the dew-point temperature.

This embodiment is also configured such that the surrounding section 30 has the operation projecting portion 32 that inwardly projects. By adopting such a configuration, the worker can work by putting his/her hand in the operation projecting portion 32 to streamline works such as setting of the sample.

This embodiment is also configured such that the airtight section 20 has: the cylindrical-shaped airtight tube 21 that internally houses the sample holding section 10; and the metal fitting cylinder portion 29a that is fixed to the end of the airtight tube 21 to form the opening portion (lower opening 23 a), and the fitting cylinder portion 29a is fitted to the opening (base opening 45a) of the closed space (airtight space portion 41a) facing the inside of the surrounding section 30 to airtightly close the opening portion (lower opening 23a) with respect to the inside of the surrounding section 30. By adopting such a configuration, only moving the fitting cylinder portion 29a of the airtight section 20 to be fitted to the base opening 45a can airtightly close the airtight section 20 with respect to the outside and to the inside of the surrounding section 30. Making the fitting cylinder portion 29a, which constitutes a seal portion, of metal can increase the durability of the seal portion.

Further, this embodiment is an analysis method by the analysis system 100 including: the sample holding section 10 that holds a sample to be analyzed; the airtight section 20 that has the opening portion (lower opening 23a) to internally house the sample holding section 10 through the opening portion; and the surrounding section 30 having flexibility and visible light permeability that separates the sample holding section 10 and the opening portion of the airtight section 20 from the outside. The analysis method includes: a step of causing the airtight section 20 to transition in state to the non-housing state where the sample holding section 10 is located outside the airtight section 20; a step of actuating the cooling section provided outside the airtight section 20; and a step of causing the airtight section 20 to transition in state to the housing state where the airtight section 20 internally houses the sample holding section 10 and airtightly closes the opening portion with respect to the inside of the surrounding section 30. By adopting such a configuration, the dew-point temperature in the atmosphere when the sample is set can be lowered to -70°C or less in a short time (roughly within 1 minute) without using an expensive and highly airtight glove box. Therefore, the analysis of the latest battery materials, etc. can be performed in an atmosphere where the residual water content is reduced to the utmost limit.

Next, an analysis system 200 according to a second embodiment of the disclosure will be described. This second embodiment is similarly configured to the first embodiment, except that a coolant container 60 in which a liquid coolant (liquefied nitrogen (liquid nitrogen), etc.) is housed is arranged on the working base 45, instead of the cooling head 91 of the cooling unit 90, compared with the first embodiment. The difference from the first embodiment is mainly described herein.

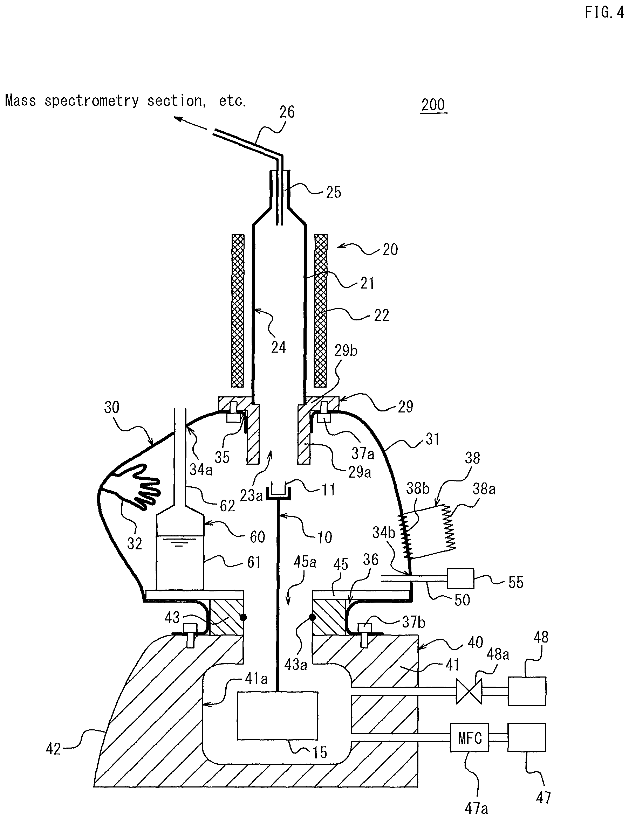

As illustrated in FIG. 4, a small-diameter side opening 34b is provided on the side of the cover body 31. The purge gas is supplied from a first gas supply section 55 through a gas introduction tube 50 inserted through the side opening 34b. The purge gas is, for example, a dried nitrogen gas, argon gas, helium gas, etc. The nitrogen gas obtained such that the liquefied nitrogen housed in the coolant container 60, which is described later, vaporizes and is discharged outside through a mouth portion 62 may be supplied as the purge gas to the cover body 31 through the gas introduction tube 50. In this case, the purge gas supplied to the cover body 31 of the surrounding section 30 may be discharged outside from one or more discharge portions provided on the cover body 31.

The coolant container 60 housing the coolant is provided inside the surrounding section 30 but outside the airtight section 20, on the working base 45. The coolant container 60 includes a torso portion 61 that houses liquefied nitrogen, the coolant, and the mouth portion 62 that causes the torso portion 61 and the outside be communicated with one another. The coolant container 60 houses liquefied nitrogen when at least the airtight section 20 is in the non-housing state (non-housing position).

The mouth portion 62 of the coolant container 60 projects outside through a mouth portion support opening 34a provided on the upper portion of the cover body 31 of the surrounding section 30. The liquefied nitrogen housed in the torso portion 61 of the coolant container 60 partially vaporizes to be discharged outside through the mouth portion 62. This promptly allows the nitrogen gas vaporized in the coolant container 60 to escape to the outside of the surrounding section 30 to prevent the pressure in the surrounding section 30 from excessively increasing.

In this embodiment, copper, aluminum, or the like with high thermal conductivity is used as the material of the coolant container 60. The material of the coolant container 60 may be stainless that is a metal that has relatively high thermal conductivity and is resistant to decay or may be other metal materials depending on the purpose. With this configuration, liquefied nitrogen cools the inner surface of the torso portion 61 to -150°C to -196°C to cool the outer surface of the torso portion 61 as well. When the outer surface of the torso portion 61 is cooled, the water vapor contained in the air around the torso portion 61 condenses on the outer surface of the torso portion 61. Following this, the water vapor contained in the air in the surrounding section 30 sequentially concentrates at the torso portion 61 of the coolant container 60 to condense. At the same time that liquefied nitrogen condenses the water vapor in the surrounding section 30, the dry nitrogen gas with a dew-point temperature of -70°C or less is introduced from the first gas supply section 55 into the surrounding section 30 through the gas introduction tube 50. With this configuration, the dew-point temperature in the surrounding section 30 can be lowered to -70°C or less in around 1 minute.

In this embodiment, liquefied nitrogen is housed in the coolant container 60 as the coolant. However, the present disclosure is not limited to this aspect. Dry ice and ethanol, or ice and sodium chloride may be housed as the coolant other than liquefied nitrogen, depending on the dew-point temperature required in the surrounding section 30.

In this embodiment, similarly to the first embodiment, the sample may be supplied from the outside and taken out to the outside, via the sample pass bag 38. The sample may also be supplied from the outside and taken out to the outside, via an opening portion that can be closed by a hook and loop fastener, zipper (fastener), or the like provided on the cover body 31. The same applies to third and subsequent embodiments.

The control system of the analysis system 200 according to this embodiment has a configuration with the refrigerator 91b and the stop valve 93a of the cooling unit 90 removed from the configuration in FIG. 2, and further illustration is thus omitted.

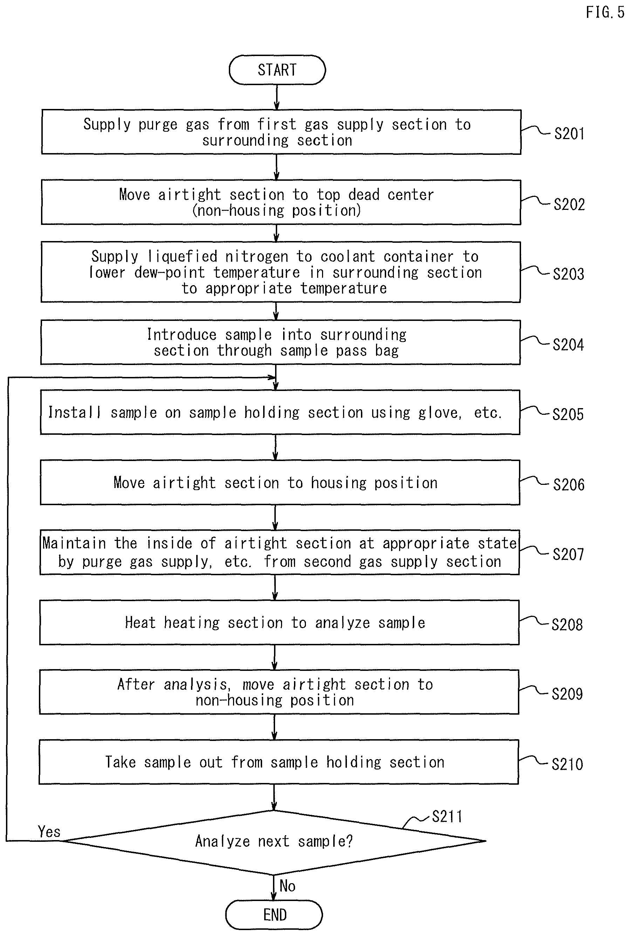

Next, the procedure for carrying out the analysis method according to the present embodiment using the analysis system 200 with the above configuration is described using FIG. 5 and other drawings.

First, before carrying out the analysis method according to this embodiment, the worker (1) installs the surrounding section 30 on the airtight section 20 and the base portion 40 and (2) arranges the coolant container 60 at the position inside the surrounding section 30 but outside the airtight section 20, where the coolant container 60 does not interfere with the airtight section 20 even in the "housing position". Steps (1) and (2) above are preconditions for carrying out the analysis method according to this embodiment, but they are not steps performed each time this analysis method is carried out and are thus not included in the procedure for carrying out the analysis method that is described below. Step (1) above is similar to the procedure of the first embodiment, and the description is thus omitted here.

Similarly to the first embodiment, "arranging the coolant container 60 at the position outside the airtight section 20" means arranging the coolant container 60 at the position outside the airtight section 20 in the plan view. The same applies to the third and subsequent embodiments. The coolant container 60 is arranged at the position where the coolant container 60 does not inhibit the supply operation of the sample to the sample holding section 10 by the worker. In FIG. 4, the coolant container 60 is arranged at the position offset in the left-right direction (direction perpendicular to the sheet of FIG. 4) from the sample holding section 10 so that the coolant container 60 does not inhibit the supply operation, etc. of the sample to the sample holding section 10 by the worker. The coolant container 60 is arranged to be located inside the surrounding section 30.

The worker supplies the coolant such as liquefied nitrogen to the coolant container 60 to actuate the cooling section, condenses the water vapor in the surrounding section 30, and then lowers the dew-point temperature in the surrounding section 30 to an appropriate dew-point temperature (step S203 in FIG. 5). By the introduction of the purge gas into the surrounding section 30 in step S201 and the actuation of the cooling section (supply of the coolant such as liquefied nitrogen to the coolant container 60) in step S203, the dew-point temperature of the space in the surrounding section 30 (space inside the surrounding section 30, in the internal space 24 of the airtight section 20, and in the airtight space portion 41a of the base portion 40) can be lowered to - 70°C or less.

In FIG. 5, the respective steps (steps S201 and S202 and steps S204 to S211) other than step S203 are similar to steps S101 and S 102 and steps S 104 to S111 in the first embodiment, respectively, and further description is thus omitted here.

As described above, this embodiment is configured such that the coolant container 60 in which a liquid coolant is housed is arranged as the cooling section, inside the surrounding section 30 but outside the airtight section 20. By adopting such a configuration, the simple configuration in which the container housing the coolant is arranged on the working base 45 can easily achieve an atmosphere where the residual water content is reduced to the utmost limit.

This embodiment is also configured such that the inside of the coolant container 60 is communicated with the outside through a surrounding section opening (mouth portion support opening 34a) provided on the surrounding section 30. By adopting such a configuration, the coolant heated to vaporize when the moisture in the surrounding section 30 is condensed can suppress an excessive increase in pressure in the surrounding section 30 to easily ensure the security of the system.

Next, an analysis system 300 according to a third embodiment of the disclosure will be described. This third embodiment is similarly configured to the second embodiment, except that a cooling coil 71 in which a liquid coolant is internally supplied is arranged instead of the coolant container 60, and the nitrogen gas discharged from the cooling coil 71 and heated by a heater 74 is supplied to the surrounding section 30, instead of the supply of the purge gas from the first gas supply section 55 to the surrounding section 30, compared with the second embodiment. The difference from the second embodiment is mainly described herein.

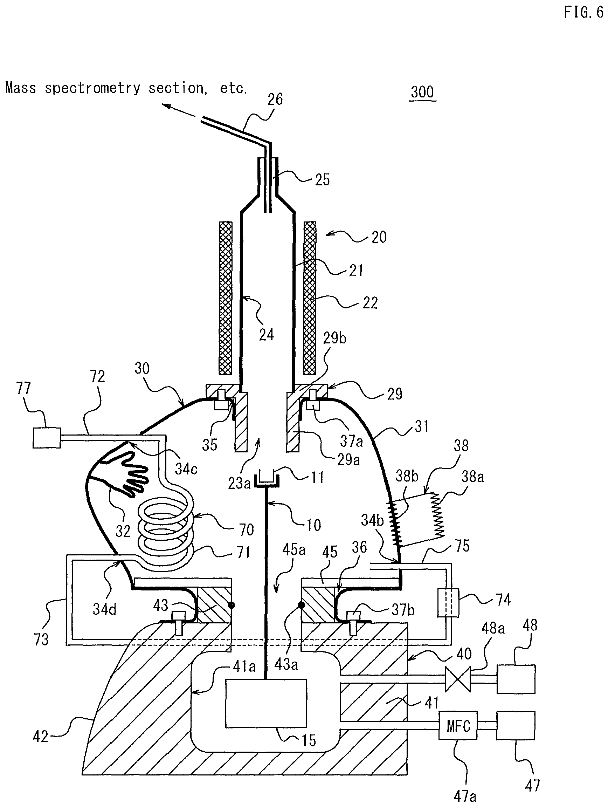

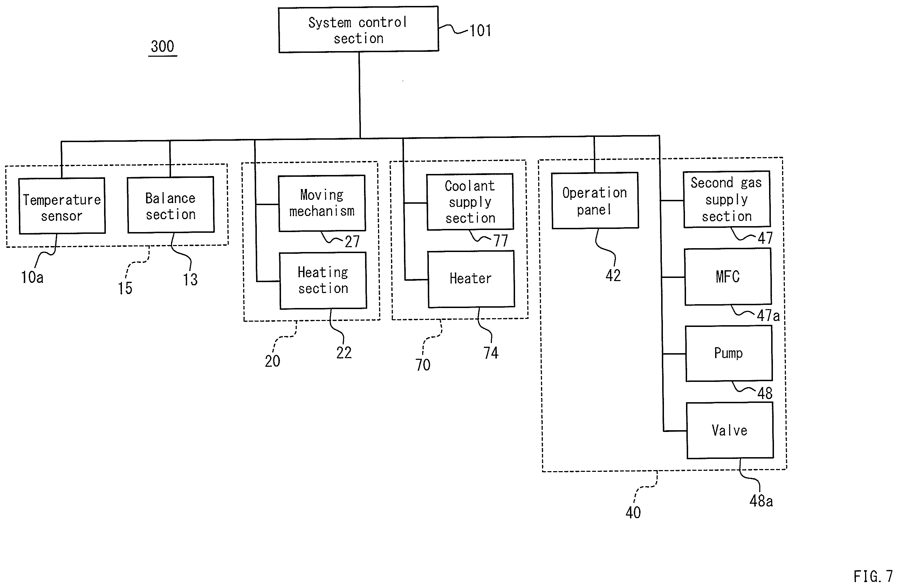

As illustrated in FIG. 6 and FIG. 7, a cooling coil system 70 includes the cooling coil 71; a coolant supply section 77 and a coolant introduction tube 72 that supply a liquid coolant (liquefied nitrogen, etc.) to the inside of the cooling coil 71; a coolant discharge tube 73 that discharges the coolant from the cooling coil 71; a heater 74 that heats the coolant in the coolant discharge tube 73; and a gas introduction tube 75 that introduces the coolant vaporized by heating into the surrounding section 30. As the material of the cooling coil 71, copper, aluminum, or the like with high thermal conductivity is used. The material of the cooling coil 71 may be stainless or the like that is a metal that has relatively high thermal conductivity and is resistant to decay. In this embodiment, the coolant discharge tube 73, the heater 74, and the gas introduction tube 75 are arranged outside the base housing 41 of the base portion 40.

The cooling coil 71 is arranged on the working base 45 at the position inside the surrounding section 30 but outside the airtight section 20 in the plan view. The cooling coil 71 is arranged offset to the front side and in the left-right direction (direction perpendicular to the sheet of FIG. 6) in the plan view, with respect to the airtight section 20. The coolant introduction tube 72 that supplies the coolant to the cooling coil 71 penetrates the inside and outside of the surrounding section 30 through a coolant introduction opening 34c provided on the upper portion of the cover body 31 of the surrounding section 30.

The coolant discharge tube 73 that leads the coolant discharged from the cooling coil 71 to the outside penetrates the inside and outside of the surrounding section 30 through a coolant discharge opening 34d provided on the lower portion of the cover body 31 of the surrounding section 30.

The coolant is supplied from the coolant supply section 77 equipped with a liquefied nitrogen container, etc. to the cooling coil 71 through the coolant introduction tube 72. The coolant is supplied to the cooling coil 71 through the coolant introduction tube 72 such that the system control section 101 opens a coolant supply valve, by the operation of the operation panel 42 or the execution of the control program by the worker. The supply of the coolant to the cooling coil 71 may be performed such that the worker manually opens the coolant supply valve, instead of the above configuration.

Liquefied nitrogen cools the inner surface of the cooling coil 71 to - 150°C to -196°C to cool the outer surface of the cooling coil 71 as well. When the outer surface of the cooling coil 71 is cooled, the water vapor contained in the air around the cooling coil 71 condenses on the outer surface of the cooling coil 71. Following this, the water vapor contained in the air in the surrounding section 30 sequentially concentrates at the cooling coil 71 to condense. At the same time that liquefied nitrogen condenses the water vapor in the surrounding section 30, the coolant (liquefied nitrogen) discharged from the cooling coil 71 is heated by the heater 74 and then introduced as a dry nitrogen gas into the surrounding section 30 through the gas introduction tube 75. With this configuration, the dew-point temperature in the surrounding section 30 can be lowered to -70°C or less in just around 1 minute. As illustrated in FIG. 6, the gas introduction tube 75 penetrates the inside and outside of the surrounding section 30 through a side opening 34b provided on the side of the cover body 31 of the surrounding section 30.

In this embodiment, as illustrated in FIG. 6, the dry nitrogen gas heated by the heater 74 is introduced as the purge gas into the surrounding section 30 through the gas introduction tube 75. The introduced purge gas is then discharged outside from a discharge portion provided on the cover body 31. The discharge portion may be formed by a discharge valve that is, for example, installed on the cover body 31 to control the discharge from an outlet provided on the cover body 31. The discharge amount of the purge gas from the outlet may be controlled by a flow meter or the like. The discharge portion may be one or more small-diameter holes provided on the cover body 31. When the coolant heated to vaporize when the moisture in the surrounding section 30 is condensed is introduced as the purge gas again into the surrounding section 30, this configuration can suppress an excessive increase in pressure in the surrounding section 30 to easily ensure the security of the system.

In this embodiment, compared with the second embodiment, liquefied nitrogen can be continuously supplied to the cooling coil 71 through the coolant introduction tube 72, which can increase the supply amount of liquefied nitrogen. Therefore, the water vapor in the surrounding section 30 can be efficiently condensed to promptly lower the dew-point temperature in the surrounding section 30.

This embodiment is configured such that the liquefied nitrogen discharged from the cooling coil 71 is heated to introduce it as the purge gas from the gas introduction tube 75 into the surrounding section 30. However, the present disclosure is not limited to this aspect. For example, when argon gas, helium gas, or the like other than nitrogen gas is used as the purge gas, similarly to the second embodiment, argon gas, helium gas, or the like may be introduced into the surrounding section 30 through the gas introduction tube 50 from the first gas supply section 55 (see FIG. 4) in a line different from the cooling coil 71. In this case, the liquefied nitrogen discharged from the cooling coil 71 through the coolant discharge tube 73 is preferably reused as, for example, liquefied nitrogen, without using it as the purge gas.

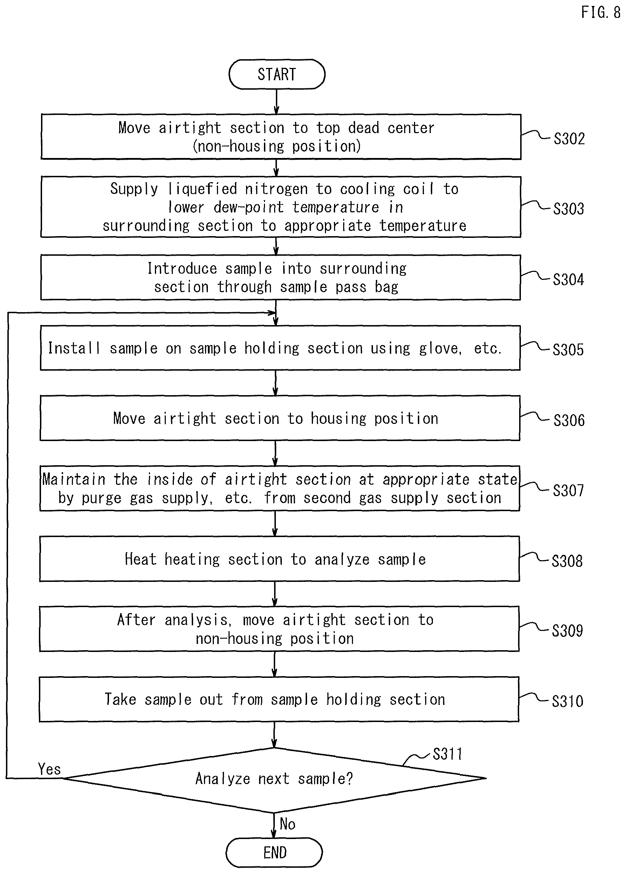

Next, the procedure for carrying out the analysis method according to the present embodiment using the analysis system 300 with the above configuration is described using FIG. 8 and other drawings.

First, before carrying out the analysis method according to this embodiment, the worker (1) installs the surrounding section 30 on the airtight section 20 and the base portion 40 and (2) arranges the cooling coil 71 at the position inside the surrounding section 30 but outside the airtight section 20, where the cooling coil 71 does not interfere with the airtight section 20 even in the "housing position". Steps (1) and (2) above are preconditions for carrying out the analysis method according to this embodiment, but they are not steps performed each time this analysis method is carried out and are thus not included in the procedure for carrying out the analysis method that is described below. Step (1) above is similar to the procedure of the first embodiment, and the description is thus omitted here.

The cooling coil 71 is arranged at the position where the cooling coil 71 does not inhibit the supply operation of the sample to the sample holding section 10 by the worker. In FIG. 6, the cooling coil 71 is arranged at the position offset in the left-right direction (direction perpendicular to the sheet of FIG. 6) from the sample holding section 10 so that the cooling coil 71 does not inhibit the supply operation, etc. of the sample to the sample holding section 10 by the worker. The cooling coil 71 is arranged to be located inside the surrounding section 30.

The worker supplies the coolant such as liquefied nitrogen to the cooling coil 71 to actuate the cooling section, condenses the water vapor in the surrounding section 30, and then lowers the dew-point temperature in the surrounding section 30 to an appropriate dew-point temperature (step S303 in FIG. 8). By the actuation of the cooling section (supply and circulation of the coolant such as liquefied nitrogen to the cooling coil 71) in step S303, the coolant discharged from the cooling coil 71 is heated by the heater 74 to be introduced as a dry nitrogen gas or the like into the surrounding section 30 through the gas introduction tube 75. With this configuration, since the dry gas is supplied to the surrounding section 30 in addition to the condensation of the water vapor in the surrounding section 30, the dew-point temperature of the space in the surrounding section 30 (space inside the surrounding section 30, in the internal space 24 of the airtight section 20, and in the airtight space portion 41a of the base portion 40) can be lowered to -70°C or less.

In FIG. 8, the respective steps (step S302 and steps S304 to S311) other than step S303 are similar to step S102 and steps S104 to S111 in the first embodiment, respectively, and further description is thus omitted here. In this embodiment, instead of step S101 (supply of the purge gas from the first gas supply section 55 to the surrounding section 30) in the first embodiment, the coolant supplied to the cooling coil 71 in step 303 is heated by the heater 74 through the coolant discharge tube 73 to be a dry gas and then supplied from the gas introduction tube 75 to the surrounding section 30.

As described above, this embodiment is configured such that the cooling coil 71 to which a liquid coolant is internally supplied is arranged as the cooling section, inside the surrounding section 30 but outside the airtight section 20. By adopting such a configuration, since the surface area of the cooling section can be increased compared with a case where the coolant container 60 is arranged in the surrounding section 30, the water vapor in the surrounding section 30 can be efficiently condensed to lower the dew-point temperature.

This embodiment is also configured such that the liquid coolant supplied to the cooling coil 71 is supplied from the outside through a surrounding section opening (coolant introduction opening 34c) provided on the surrounding section 30 and discharged outside from a surrounding section opening (coolant discharge opening 34d). By adopting such a configuration, compared with the second embodiment, liquefied nitrogen can be continuously supplied to the cooling coil 71 through the coolant introduction tube 72 to increase the supply amount of liquefied nitrogen. Therefore, the water vapor in the surrounding section 30 can be efficiently condensed to promptly lower the dew-point temperature in the surrounding section 30.

This embodiment is also configured such that the discharged liquid coolant is heated and then introduced as the purge gas into the surrounding section 30. By adopting such a configuration, only providing the coolant supply section 77 that introduces the coolant can supply the coolant and the purge gas, two lines, to simplify the system.

This embodiment is also configured such that a discharge portion for discharging the gas to the outside is provided on the surrounding section 30. By adopting such a configuration, the coolant heated to vaporize when the moisture in the surrounding section 30 is condensed can suppress an excessive increase in pressure in the surrounding section 30 to easily ensure the security of the system.

Next, an analysis system 400 according to a fourth embodiment of the disclosure will be described. This fourth embodiment is similarly configured to the second embodiment, except that a coolant container 80 without a mouth portion is arranged instead of the coolant container 60, and liquefied nitrogen is continuously supplied to the coolant container 80 from a coolant supply section 87, compared with the second embodiment. The difference from the second embodiment is mainly described herein.

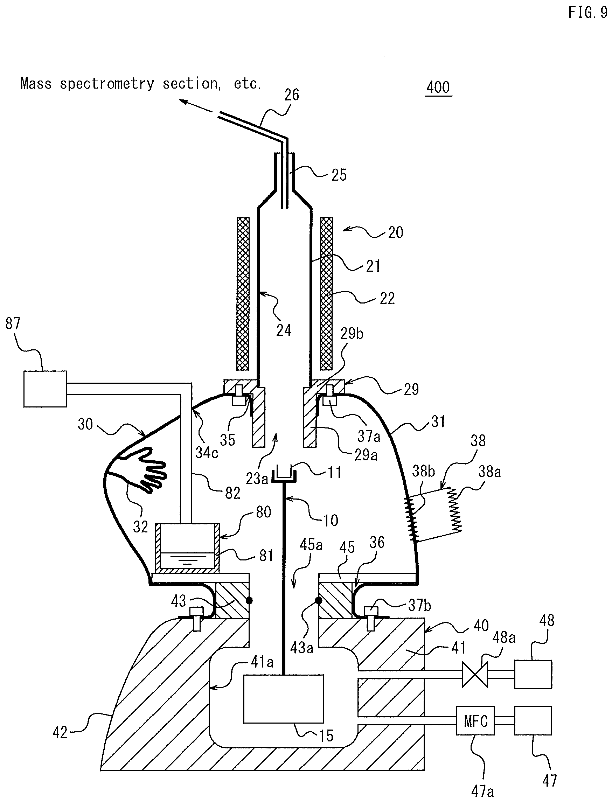

The coolant container 80 has a container body 81 with a bottomed cylindrical shape as illustrated in FIG. 9. A coolant introduction tube 82 that supplies liquefied nitrogen to the container body 81 passes through a coolant introduction opening 34c to penetrate the cover body 31 at the upper portion of the surrounding section 30. In this embodiment, as the material of the coolant container 80, copper, aluminum, or the like with high thermal conductivity is used. The material of the coolant container 80 may be stainless or the like that is a metal that has relatively high thermal conductivity and is resistant to decay.

The coolant container 80 is arranged on the working base 45 at the position inside the surrounding section 30 but outside the airtight section 20 in the plan view. The coolant container 80 is arranged offset to the front side and in the left-right direction (direction perpendicular to the sheet of FIG. 9) in the plan view, with respect to the airtight section 20.

The liquefied nitrogen supplied to the coolant container 80 is heated to vaporize in association with the condensation of the water vapor in the surrounding section 30 and then functions as the purge gas in the surrounding section 30. Therefore, in this embodiment, without need for the gas introduction tube 50, 75 for introducing the purge gas into the surrounding section 30 as in the second embodiment and the third embodiment, the liquefied nitrogen supplied to lower the dew-point temperature directly functions as the purge gas.

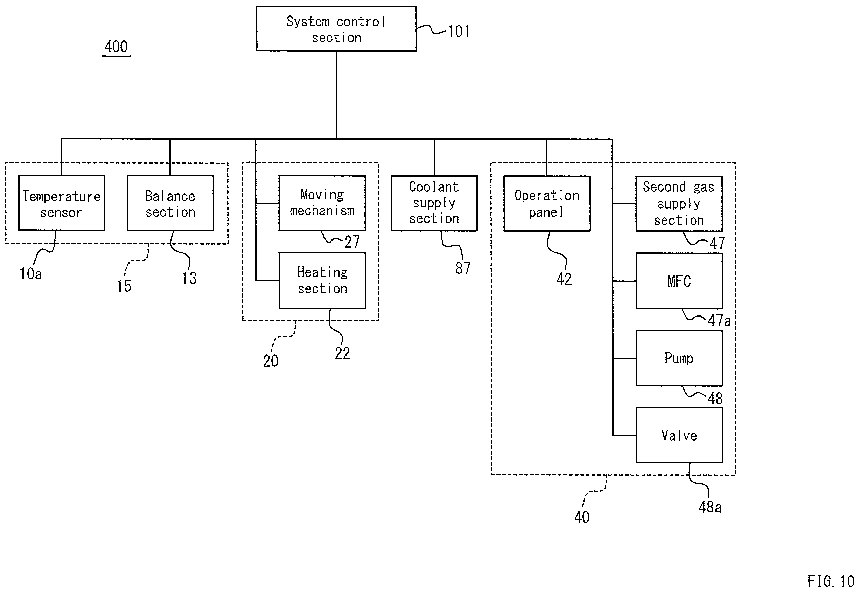

In this embodiment, the liquefied nitrogen housed in the coolant container 80 vaporizes to be a purge gas, thus requiring no heater 74 that heats liquefied nitrogen as in the third embodiment. That is, the control system of the analysis system 400 according to this embodiment is configured such that the heater 74 is removed from the configuration illustrated in FIG. 7 and the coolant supply section 87 that supplies liquefied nitrogen to the coolant introduction tube 82 is used instead of the coolant supply section 77 of the cooling coil system 70 (see FIG. 10).

The coolant is supplied from the coolant supply section 87 to the coolant container 80 through the coolant introduction tube 82 when the system control section 101 opens the coolant supply valve, by the operation of the operation panel 42 or the execution of the control program by the worker. The supply of the coolant to the coolant container 80 may be performed such that the worker manually opens the coolant supply valve, instead of the above configuration.

Liquefied nitrogen cools the inner surface of the coolant container 80 to -150°C to -196°C to cool the outer surface of the coolant container 80 as well. When the inner surface and outer surface of the coolant container 80 are cooled, the water vapor contained in the air around the coolant container 80 condenses on the inner surface and outer surface of the coolant container 80. Following this, the water vapor contained in the air in the surrounding section 30 sequentially concentrates at the coolant container 80 to condense. The liquefied nitrogen housed in the coolant container 80 sequentially vaporizes to be introduced as a dry nitrogen gas, the purge gas, into the surrounding section 30. With this configuration, the dew-point temperature in the surrounding section 30 can be lowered to -70°C or less in just around 1 minute. As in the second embodiment, the purge gas may be further supplied to the surrounding section 30 from the first gas supply section 55.

In this embodiment, as described above, the liquefied nitrogen in the coolant container 80 vaporizes to be introduced as the purge gas into the surrounding section 30. The introduced purge gas is then discharged outside from a discharge portion provided on the cover body 31. When the coolant heated to vaporize when the moisture in the surrounding section 30 is condensed is introduced as the purge gas into the surrounding section 30, this configuration can suppress an excessive increase in pressure in the surrounding section 30 to easily ensure the security of the system.

In this embodiment, compared with the second embodiment, liquefied nitrogen can be continuously supplied through the coolant introduction tube 82, which can increase the supply amount of the liquefied nitrogen to be supplied to the coolant container 80. Therefore, the water vapor in the surrounding section 30 can be efficiently condensed to promptly lower the dew-point temperature in the surrounding section 30.

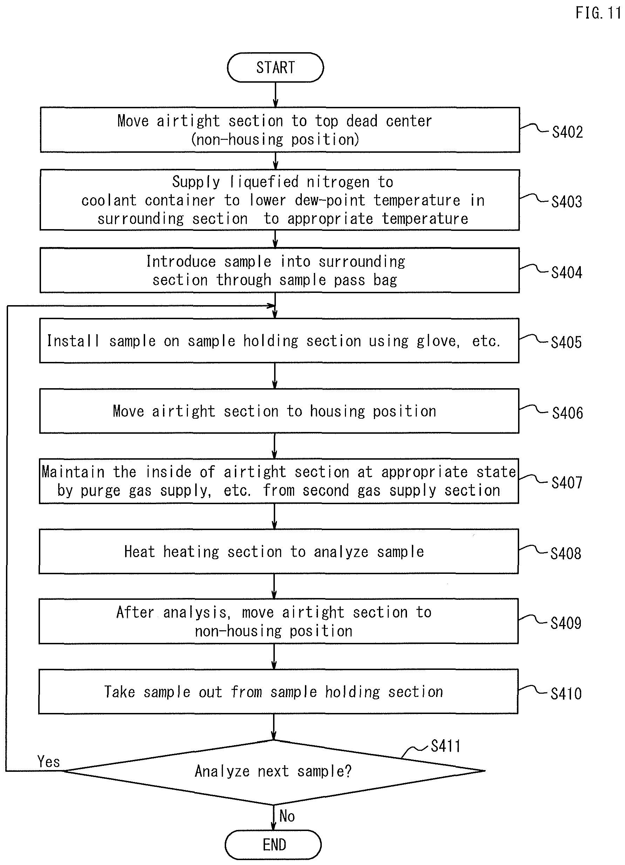

Next, the procedure for carrying out the analysis method according to the present embodiment using the analysis system 400 with the above configuration is described using FIG. 11 and other drawings.

First, before carrying out the analysis method according to this embodiment, the worker (1) installs the surrounding section 30 on the airtight section 20 and the base portion 40 and (2) arranges the coolant container 80 at the position inside the surrounding section 30 but outside the airtight section 20, where the coolant container 80 does not interfere with the airtight section 20 even in the "housing position". Steps (1) and (2) above are preconditions for carrying out the analysis method according to this embodiment, but they are not steps performed each time this analysis method is carried out and are thus not included in the procedure for carrying out the analysis method that is described below. Step (1) above is similar to the procedure of the first embodiment, and the description is thus omitted here.

The coolant container 80 is arranged at the position where the coolant container 80 does not inhibit the supply operation of the sample to the sample holding section 10 by the worker. In FIG. 9, the coolant container 80 is arranged at the position offset in the left-right direction (direction perpendicular to the sheet of FIG. 9) from the sample holding section 10 so that the coolant container 80 does not inhibit the supply operation, etc. of the sample to the sample holding section 10 by the worker. The coolant container 80 is arranged to be located inside the surrounding section 30.

The worker supplies the coolant such as liquefied nitrogen from the coolant supply section 87 to the coolant container 80 through the coolant introduction tube 82 to actuate the cooling section, condenses the water vapor in the surrounding section 30, and then lowers the dew-point temperature in the surrounding section 30 to an appropriate dew-point temperature (step S403 in FIG. 11). By the actuation of the cooling section (supply of the coolant such as liquefied nitrogen to the coolant container 80) in step S403, the vaporized coolant is introduced as a dry nitrogen gas or the like into the surrounding section 30 from the coolant container 80. With this configuration, since the dry gas is supplied to the surrounding section 30 in addition to the condensation of the water vapor in the surrounding section 30, the dew-point temperature of the space in the surrounding section 30 (space inside the surrounding section 30, in the internal space 24 of the airtight section 20, and in the airtight space portion 41a of the base portion 40) can be lowered to -70°C or less.

In FIG. 11, the respective steps (step S402 and steps S404 to S411) other than step S403 are similar to step S 102 and steps S104 to S 111 in the first embodiment, respectively, and further description is thus omitted here. In this embodiment, instead of step S101 (supply of the purge gas from the first gas supply section 55 to the surrounding section 30) in the first embodiment, the coolant supplied to the coolant container 80 in step 403 vaporizes to be a dry gas and is then supplied to the surrounding section 30.

As described above, this embodiment is configured such that the liquid coolant introduced from the outside through a surrounding section opening (coolant introduction opening 34c) provided on the surrounding section 30 is stored, as the cooling section, inside the surrounding section 30 but outside the airtight section 20. By adopting such a configuration, compared with the second embodiment, liquefied nitrogen can be continuously supplied to the coolant container 80 through the coolant introduction tube 82 to increase the supply amount of liquefied nitrogen. Therefore, the water vapor in the surrounding section 30 can be efficiently condensed to promptly lower the dew-point temperature in the surrounding section 30.

This embodiment is also configured such that the liquid coolant introduced from the outside is housed in the coolant container 80 arranged inside the surrounding section 30 but outside the airtight section 20. By adopting such a configuration, the liquefied nitrogen supplied to the coolant container 80 is heated to vaporize in association with the condensation of the water vapor in the surrounding section 30 and then functions as the purge gas in the surrounding section 30. Therefore, in this embodiment, without need for the gas introduction tube 50, 75 for introducing the purge gas into the surrounding section 30 as in the second embodiment and the third embodiment, the liquefied nitrogen supplied to lower the dew-point temperature can directly function as the purge gas.

Although the present disclosure has been described with reference to the drawings and examples, it will be appreciated by a skilled person that various modifications or alterations may be made based on the present disclosure. Therefore, it should be noted that such modifications or alterations are within the scope of the present disclosure. For example, the functions included in each component and each step may be rearranged without being logically inconsistent, and a plurality of components and steps may be combined into one or divided.

For example, in the first to fourth embodiments, the system control section 101 for controlling the analysis systems 100 to 400 is configured to collectively control each functional section. However, the present disclosure is not limited to this aspect. For example, the worker may directly manually operate and control each functional section.

Further, in the first to fourth embodiments, a thermocouple made by platinum and platinum rhodium is used as the temperature sensor 10a, as an example. However, the present disclosure is not limited to this aspect. The thermocouple may be formed of, for example, tungsten and tungsten rhenium alloy, iridium and iridium rhodium alloy, chromel and constantan, chromel and alumel, or platinel, etc.

Further, in the first to fourth embodiments, it is configured such that the airtight space portion 41a is provided on the base portion 40. However, the present disclosure is not limited to this aspect. For example, when there is no need to provide the balance section 13 and the like without performing the TG, the airtight space portion 41a does not have to be provided on the base portion 40.

Further, in the first to fourth embodiments, it is configured such that moving the airtight section 20 in the vertical direction causes state transition between the housing state and the non-housing state. However, the present disclosure is not limited to this aspect. It may be configured such that the sample holding section 10 is moved into the airtight section 20 and the lower opening 23a (opening portion) is closed to be in the housing state, while the sample holding section 10 is moved outside the airtight section 20 and the lower opening 23a (opening portion) is opened to be in the non-housing state.

Further, in the third and fourth embodiments, it is configured such that the purge gas in the cover body 31 is gradually discharged through the discharge portion such as a discharge valve or a plurality of small-diameter holes provided on the cover body 31. However, the present disclosure is not limited to this aspect. Instead of providing a discharge valve or a plurality of small-diameter holes on the cover body 31, the purge gas may be gradually discharged from, for example, a clearance between the cover body 31 and the flange member 29 or a clearance between the cover body 31 and the base housing 41.

### REFERENCE SIGNS LIST

- 10: sample holding section
- 10a: temperature sensor
- 11: sample container
- 13: balance section (weight measuring section)
- 15: measuring section
- 20: airtight section
- 21: airtight tube
- 22: heating section
- 23a: lower opening (opening portion)
- 24: internal space
- 25: upper opening
- 26: capillary tube
- 27: moving mechanism
- 29: flange member
- 29a: fitting cylinder portion
- 29b: flange portion
- 30: surrounding section
- 31: cover body
- 32: operation projecting portion
- 34a: mouth portion support opening
- 34b: side opening
- 34c: coolant introduction opening (surrounding section opening)
- 34d: coolant discharge opening (surrounding section opening)
- 35: cover upper opening
- 36: cover lower opening
- 37a: cover upper fixing screw
- 37b: cover lower fixing screw
- 38: sample pass bag
- 38a: outer zipper
- 38b: inner zipper
- 40: base portion
- 41: base housing
- 41a: airtight space portion (closed space)
- 42: operation panel
- 43: fixing cylinder portion
- 43a: O-ring
- 45: working base
- 45a: base opening (opening)
- 47: second gas supply section
- 47a: mass flow controller
- 48: pump
- 48a: valve
- 50: gas introduction tube
- 55: first gas supply section
- 60: coolant container (cooling section)
- 61: torso portion
- 62: mouth portion
- 70: cooling coil system
- 71: cooling coil (cooling section)
- 72: coolant introduction tube
- 73: coolant discharge tube
- 74: heater
- 75: gas introduction tube
- 77: coolant supply section
- 80: coolant container (cooling section)
- 81: container body
- 82: coolant introduction tube
- 87: coolant supply section
- 90: cooling unit
- 91: cooling head (cooling section)
- 91a: refrigerant tube
- 91b: refrigerator
- 92: mesh cover
- 93: drain tube
- 93a: stop valve
- 100, 200, 300, 400: analysis system
- 101: system control section

## Claims

1. An analysis system comprising:
a sample holding section that holds a sample to be analyzed;
an airtight section that has an opening portion to internally house the sample holding section through the opening portion; and
a surrounding section having flexibility and visible light permeability that separates the sample holding section and the opening portion of the airtight section from the outside,
wherein the airtight section is capable of transitioning in state between a housing state where the airtight section internally houses the sample holding section and airtightly closes the opening portion with respect to the inside of the surrounding section and a non-housing state where the sample holding section is located outside the airtight section, and
when at least the airtight section is in the non-housing state, a cooling section is arranged inside the surrounding section but outside the airtight section.

2. The analysis system according to claim 1, wherein the inside of the airtight section is capable of being evacuated or subjected to vacuum gas replacement after the opening portion is airtightly closed with respect to the inside of the surrounding section.

3. The analysis system according to claim 1 or 2, wherein a cooling head of a refrigerator, a Peltier element or any other cooling devices is arranged as the cooling section, inside the surrounding section but outside the airtight section.

4. The analysis system according to any one of claims 1 to 3, wherein a coolant container in which a liquid coolant is housed is arranged as the cooling section, inside the surrounding section but outside the airtight section.

5. The analysis system according to claim 4, wherein the inside of the coolant container is communicated with the outside through a surrounding section opening provided on the surrounding section.

6. The analysis system according to claim 1 or 2, wherein a cooling coil to which a liquid coolant is internally supplied is arranged as the cooling section, inside the surrounding section but outside the airtight section.

7. The analysis system according to claim 6, wherein the liquid coolant supplied to the cooling coil is supplied from the outside and discharged outside, through a surrounding section opening provided on the surrounding section.

8. The analysis system according to claim 7, wherein the discharged liquid coolant is heated and then introduced into the surrounding section as a purge gas.

9. The analysis system according to claim 1 or 2, wherein a liquid coolant introduced from the outside through a surrounding section opening provided on the surrounding section is stored, as the cooling section, inside the surrounding section but outside the airtight section.

10. The analysis system according to claim 9, wherein the liquid coolant introduced from the outside is housed in a coolant container arranged inside the surrounding section but outside the airtight section.

11. The analysis system according to any one of claims 1 to 10, wherein the surrounding section has an operation projecting portion that inwardly projects.

12. The analysis system according to any one of claims 1 to 11, wherein a discharge portion for discharging a gas to the outside is provided on the surrounding section.

13. The analysis system according to any one of claims 1 to 12, wherein the airtight section has: a cylindrical-shaped airtight tube that internally houses the sample holding section; and a metal fitting cylinder portion that is fixed to an end of the airtight tube to form the opening portion, and the fitting cylinder portion is fitted to an opening of a closed space facing the inside of the surrounding section to airtightly close the opening portion with respect to the inside of the surrounding section.

14. An analysis method by an analysis system including:
a sample holding section that holds a sample to be analyzed;
an airtight section that has an opening portion to internally house the sample holding section through the opening portion; and
a surrounding section having flexibility and visible light permeability that separates the sample holding section and the opening portion of the airtight section from the outside,
the analysis method comprising:
a step of causing the airtight section to transition in state to a non-housing state where the sample holding section is located outside the airtight section;
a step of actuating a cooling section provided outside the airtight section; and
a step of causing the airtight section to transition in state to a housing state where the airtight section internally houses the sample holding section and airtightly closes the opening portion with respect to the inside of the surrounding section.

## Amended claims

### Amended claims in accordance with Rule 137(2) EPC.

1. An analysis system (100, 200, 300, 400) comprising:
a sample holding section (10) that holds a sample to be analyzed;
an airtight section (20) that has an opening portion to internally house the sample holding section (10) through the opening portion; and
a surrounding section (30) having visible light permeability that separates the sample holding section (10) and the opening portion of the airtight section (20) from the outside,
wherein the airtight section (20) is capable of transitioning in state between a housing state where the airtight section (20) internally houses the sample holding section (10) and airtightly closes the opening portion with respect to the inside of the surrounding section (30) and a non-housing state where the sample holding section (10) is located outside the airtight section (20),
**characterized in that**
the surrounding section (30) has flexibility,
when at least the airtight section (20) is in the non-housing state, a cooling section is arranged inside the surrounding section (30) but outside the airtight section (20).

2. The analysis system (100, 200, 300, 400) according to claim 1, wherein the inside of the airtight section (20) is capable of being evacuated or subjected to vacuum gas replacement after the opening portion is airtightly closed with respect to the inside of the surrounding section (30).

3. The analysis system (100) according to claim 1 or 2, wherein a cooling head (91) of a refrigerator (91b), a Peltier element or any other cooling devices is arranged as the cooling section, inside the surrounding section (30) but outside the airtight section (20).

4. The analysis system (200, 400) according to any one of claims 1 to 3, wherein a coolant container (60, 80) in which a liquid coolant is housed is arranged as the cooling section, inside the surrounding section (30) but outside the airtight section (20).

5. The analysis system (200) according to claim 4, wherein the inside of the coolant container (60) is communicated with the outside through a surrounding section opening provided on the surrounding section (30).

6. The analysis system (300) according to claim 1 or 2, wherein a cooling coil (71) to which a liquid coolant is internally supplied is arranged as the cooling section, inside the surrounding section (30) but outside the airtight section (20).

7. The analysis system (300) according to claim 6, wherein the liquid coolant supplied to the cooling coil (71) is supplied from the outside and discharged outside, through a surrounding section opening (34c, 34d) provided on the surrounding section (30).

8. The analysis system (300) according to claim 7, wherein the discharged liquid coolant is heated and then introduced into the surrounding section (30) as a purge gas.

9. The analysis system (400) according to claim 1 or 2, wherein a liquid coolant introduced from the outside through a surrounding section opening provided on the surrounding section (30) is stored, as the cooling section, inside the surrounding section (30) but outside the airtight section (20).

10. The analysis system (400) according to claim 9, wherein the liquid coolant introduced from the outside is housed in a coolant container arranged inside the surrounding section (30) but outside the airtight section (20).

11. The analysis system (100, 200, 300, 400) according to any one of claims 1 to 10, wherein the surrounding section (30) has an operation projecting portion (32) that inwardly projects.

12. The analysis system (100, 200, 300, 400) according to any one of claims 1 to 11, wherein a discharge portion for discharging a gas to the outside is provided on the surrounding section (30).

13. The analysis system (100, 200, 300, 400) according to any one of claims 1 to 12, wherein the airtight section (20) has: a cylindrical-shaped airtight tube that internally houses the sample holding section (10); and a metal fitting cylinder portion that is fixed to an end of the airtight tube to form the opening portion, and the fitting cylinder portion is fitted to an opening of a closed space facing the inside of the surrounding section (30) to airtightly close the opening portion with respect to the inside of the surrounding section (30).

14. An analysis method by an analysis system (100, 200, 300, 400) including:
a sample holding section (10) that holds a sample to be analyzed;
an airtight section (20) that has an opening portion to internally house the sample holding section (10) through the opening portion; and
a surrounding section (30) having visible light permeability that separates the sample holding section (10) and the opening portion of the airtight section (20) from the outside,
the analysis method comprising:
a step of causing the airtight section (20) to transition in state to a non-housing state where the sample holding section (10) is located outside the airtight section (20); and
a step of causing the airtight section (20) to transition in state to a housing state where the airtight section (20) internally houses the sample holding section (10) and airtightly closes the opening portion with respect to the inside of the surrounding section (30),
**characterized in that**
the surrounding section (30) has flexibility,
the analysis method further comprising:
a step of actuating a cooling section provided inside the surrounding section (30) but outside the airtight section (20) when at least the airtight section (20) is in the non-housing state.
